(19) Europäisches Patentamt / European Patent Office / Office européen des brevets

(11) **EP 4 394 971 A1**

(12) **EUROPEAN PATENT APPLICATION**
published in accordance with Art. 153(4) EPC

(43) Date of publication:
**03.07.2024 Bulletin 2024/27**

(21) Application number: **21958946.2**

(22) Date of filing: **30.09.2021**

(51) International Patent Classification (IPC):
***H01M 10/0525*** (2010.01)     ***H01M 10/058*** (2010.01)

(52) Cooperative Patent Classification (CPC):
**H01M 10/0525; H01M 10/058; H01M 10/0587; H01M 50/593;** Y02E 60/10

(86) International application number:
**PCT/CN2021/122353**

(87) International publication number:
**WO 2023/050374 (06.04.2023 Gazette 2023/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Dongguan Amperex Technology Limited**
**Dongguan City, Guangdong Province, PRC 523000 (CN)**

(72) Inventor: **HU, Kewen**
**Dongguan City, Guangdong 523000 (CN)**

(74) Representative: **Icosa**
**83 avenue Denfert-Rochereau**
**75014 Paris (FR)**

(54) **ADHESIVE STRUCTURE, AND ELECTROCHEMICAL DEVICE AND ELECTRONIC DEVICE COMPRISING SAME**

(57) This application provides an adhesive structure, an electrochemical device containing the adhesive structure, and an electronic device. The adhesive structure includes a swelling layer and an adhesive layer disposed on at least one surface of the swelling layer. The swelling layer includes poly(acrylonitrile-co-butadiene-co-styrene). When the adhesive structure of this application is soaked in an 85 °C solution for 4 hours, a three-dimensional volume expansion rate of the adhesive structure is 180% to 500%. The adhesive structure can effectively fill a clearance between the housing and the electrode assembly. In addition, the adhesive structure is highly elastic and adhesive, and can cushion the stress generated in a drop test, a tumbling test, or the like, and maintain a good binding effect. The adhesive structure used in the electrochemical device can effectively improve safety performance of the electrochemical device. The electronic device of this application includes the electrochemical device of this application, and therefore, exhibits good safety performance.

(f)     (g)

FIG. 3

Processed by Luminess, 75001 PARIS (FR)

EP 4 394 971 A1

**Description**

**TECHNICAL FIELD**

This application relates to the field of electrochemistry, and in particular, to an adhesive structure, an electrochemical device containing the adhesive structure, and an electronic device.

**BACKGROUND**

As a typical representative of devices that utilize an electrical-to-chemical energy conversion, lithium-ion batteries are increasingly widely used in various fields.

In an existing cylindrical lithium-ion battery, due to existence of a clearance between an electrode assembly and a housing, a relative movement occurs between the electrode assembly and the housing during a drop test or a tumbling test, thereby resulting in severe consequences such as failure caused by a voltage drop, a break of an electrode plate, or a break of a tab. To solve the above problems, a person skilled in the art soaks swellable adhesive tape in an electrolyte solution, so that the adhesive tape extends in three dimensions, that is, in a length direction, a width direction, and a thickness direction, so as to fill the clearance between the electrode assembly and the housing and constrain the vibration and shake of the electrode assembly inside the housing, and in turn, cushion the drop and tumbling stress and improve the safety of the lithium-ion battery.

However, the currently used swellable adhesive tape is disadvantageous in practical applications. For example, the disadvantages are: the material is hard and of low adaptability, and is inadaptable to the electrode assemblies of diverse curvatures, and incurs warped edges before being placed into the housing; the initial tack is low in a rolling ball test, and the adhesive tape is unable to adhere quickly or fix an object to be bonded, and unable to adapt to a high-speed production line; and the adhesive tape is fixed to the object by merely filling the clearance and abutting the object after swelling, and is prone to fail in demanding application scenarios such as tumbling and vibration. Due to such disadvantages, a lithium-ion battery that employs the swellable adhesive tape usually exhibits low safety performance.

**SUMMARY**

This application provides an adhesive structure, an electrochemical device containing the adhesive structure, and an electronic device to improve safety performance of the electrochemical device.

It is hereby noted that in the following description, this application is construed by using a lithium-ion battery as an example of the electrochemical device, but the electrochemical device according to this application is not limited to the lithium-ion battery. Specific technical solutions are as follows:

A first aspect of this application provides an adhesive structure. The adhesive structure includes a swelling layer and an adhesive layer disposed on at least one surface of the swelling layer. The swelling layer includes poly(acrylonitrile-co-butadiene-co-styrene) (ABS).

The disposed adhesive layer enables the adhesive structure to effectively bond the electrode assembly and the housing together. The adhesive structure of this application exerts a binding force on the electrode assembly that is higher than a binding force exerted on the electrode assembly by utilizing abutment and fixation in the prior art, and is applicable to demanding electrode assemblies of diverse curvatures in vibration and tumbling scenarios. In the poly(acrylonitrile-co-butadiene-co-styrene) in the swelling layer, the acrylonitrile is superior in chemical resistance, heat resistance, and hardness; the butadiene is of relatively high elasticity and toughness; and the styrene is of a thermoplastic processing feature. The swelling layer formed by the poly(acrylonitrile-co-butadiene-co-styrene) compounded of the three substances endows the adhesive structure with high flexibility and adaptability, enables quick adhesion to the electrode assembly and the housing, and is applicable to insulation and fixation of a termination part of the electrode assembly. When the adhesive structure stands in a cold-drying system at 2 °C to 10 °C for 24 hours, the adhesive structure still remains warp-free. When the adhesive structure of this application is soaked in the electrolyte solution at 85 °C for 4 hours, the poly(acrylonitrile-co-butadiene-co-styrene) in the swelling layer is pressed and enlarged at a relative fixed position between molecules under the action of the electrolyte solution. The intermolecular force is weakened, so that the adhesive structure extends three-dimensionally along the directions of length, width, and thickness of the adhesive structure. The three-dimensional volume expansion rate of the adhesive structure is as high as 180% to 500%. Therefore, the adhesive structure of this application can effectively fill a clearance between the housing and the electrode assembly three-dimensionally. In addition, the adhesive structure is highly elastic and adhesive, and can effective cushion the stress generated in a drop test, a tumbling test, or the like, so as to maintain a good binding effect of the adhesive structure on the electrode assembly, and in turn, effectively improve the safety performance of the electrochemical device.

The weight-average molecular weight of the poly(acrylonitrile-co-butadiene-co-styrene) is not particularly limited herein, as long as the objectives of this application can be achieved. For example, the weight-average molecular weight of the poly(acrylonitrile-co-butadiene-co-styrene) may be 50000 to 700000.

In some embodiments of this application, based on a total mass of the swelling layer, a mass percent of the poly(acrylonitrile-co-butadiene-co-styrene) is 85% to 98%. For example, the mass percent of the poly(acrylonitrile-co-butadiene-co-styrene) may be 85%, 90%, 95%, 98%, or a value falling within a range formed by any two thereof. If the mass percent of the poly(acrylonitrile-co-butadiene-co-styrene) is unduly low (for example, lower than 85%), the three-dimensional volume expansion rate of the adhesive structure decreases, and the binding effect of the adhesive structure on the electrode assembly will be lower. If the mass percent of the poly(acrylonitrile-co-butadiene-co-styrene) is unduly high (for example, higher than 98%), the three-dimensional volume expansion rate of the adhesive structure is unduly high, and will impair the swelling performance of the electrochemical device. Controlling the mass percent of the poly(acrylonitrile-co-butadiene-co-styrene) in the swelling layer to fall within the above range makes it more convenient for the adhesive structure to fill between the electrode assembly and the housing, thereby more effectively enhancing the safety performance of the electrochemical device.

In some embodiments of this application, based on a total mass of the poly(acrylonitrile-co-butadiene-co-styrene), a mass ratio between the acrylonitrile, the butadiene, and the styrene in the poly(acrylonitrile-co-butadiene-co-styrene) is (5 to 20): (55 to 80): (5 to 25). For example, the mass ratio between the acrylonitrile, the butadiene, and the styrene is 5: 65: 25, 5: 80: 15, 10: 75: 15, 18: 60: 22, 20: 75: 5, or a value falling within a range formed by any two thereof. Controlling the mass ratio between the acrylonitrile, the butadiene, and the styrene to fall within the above range makes it more convenient for the adhesive structure to fill between the electrode assembly and the housing, thereby more effectively enhancing the safety performance of the electrochemical device.

In some embodiments of this application, the swelling layer further includes functional resin. The functional resin includes at least one of poly(styrene-b-ethylene-b-butene-b-styrene) (SEBS), poly(ethylene-co-vinyl acetate) (EVA), polyurethane elastomer, thermoplastic elastomer (TPE/TPR), polyurethane acrylate (PUA), polyisobutylene, or polybutadiene. The functional resin further added in the swelling layer makes the adhesive structure still maintain an intact swollen form when soaked in the electrolyte solution at a high temperature (> 60 °C) for a long period (> 4 h), thereby effectively improving the safety performance of the electrochemical device.

The weight-average molecular weight of the SEBS and EVA is not particularly limited herein, as long as the objectives of this application can be achieved. For example, the weight-average molecular weight of the SEBS may be 80000 to 150000, and the weight-average molecular weight of the EVA is 342.43.

The mass percent of the functional resin in the swelling layer is not particularly limited herein, as long as the objectives of this application can be achieved. For example, based on the total mass of the swelling layer, the mass percent of the functional resin may be 2% to 15%. The mass percent of the functional resin falling within the above range further improves the swollen form of the adhesive structure soaked in the electrolyte solution at a high temperature for a long period, thereby effectively improving the safety performance of the electrochemical device.

In some embodiments of this application, the thickness of the adhesive structure is 20 μm to 50 μm. For example, the thickness of the adhesive structure may be 20 μm, 25 μm, 30 μm, 35 μm, 40 μm, 45 μm, 50 μm, or a value falling within a range formed by any two thereof. By controlling the thickness of the adhesive structure to fall within the above range, the adhesive structure can reasonably fill the clearance between the electrode assembly and the housing by extending three-dimensionally along the directions of length, width, and thickness, thereby improving the binding effect of the adhesive structure on the electrode assembly, reducing the size of the lithium-ion battery, and in turn, increasing the energy density of the electrochemical device.

In some embodiments of this application, the thickness of the swelling layer is 10 μm to 30 μm. For example, the thickness of the swelling layer may be 10 μm, 15 μm, 20 μm, 25 μm, 30 μm, or a value falling within a range formed by any two thereof. If the thickness of the swelling layer is unduly small (for example, less than 10 μm), the swelling effect of the adhesive structure is impaired. If the thickness of the swelling layer is unduly large (for example, greater than 30 μm), the thickness of the adhesive structure increases, and the distance between the electrode assembly and the housing needs to increase accordingly in order to meet the clearance required by the adhesive structure, thereby increasing the size of the electrochemical device, and reducing the energy density of the electrochemical device.

In some embodiments of this application, the thickness of the adhesive layer is 5 μm to 10 μm. For example, the thickness of the adhesive layer may be 5 μm, 6 μm, 7 μm, 8 μm, 9 μm, 10 μm, or a value falling within a range formed by any two thereof. If the thickness of the adhesive layer is unduly small (for example, less than 5 μm), the bonding force between the adhesive structure and the electrode assembly or housing is reduced, and the bonding effect of the adhesive structure to the electrode assembly or housing is reduced. If the thickness of the adhesive layer is unduly large (for example, greater than 10 μm), the thickness of the adhesive structure increases, and the distance between the electrode assembly and the housing needs to increase accordingly in order to meet the clearance required by the adhesive structure, thereby increasing the size of the electrochemical device, and reducing the energy density of the electrochemical device.

It is hereby noted that the adhesive layer may be disposed on one surface of the swelling layer or on both surfaces of the swelling layer. In some embodiments, the adhesive layer is disposed on each of the two surfaces of the swelling layer. The adhesive layers on the two sides of the swelling layer may be the same or different.

In some embodiments of this application, the material of the adhesive layer includes at least one of polymethyl methacrylate, polypropylene (PP), hot-melt styrene-isoprene-styrene rubber (SIS), polyethylene, or polyamide. The above material used as the material of the adhesive layer improves the bonding force between the adhesive structure and the electrode assembly.

In some embodiments of this application, the bonding force of the adhesive layer is 0.15 N/mm to 0.5 N/mm. When the bonding force of the adhesive layer falls within the above range, it indicates that excellent bonding properties are achieved between the adhesive layer and the electrode assembly and/or the housing, thereby effectively enhancing the binding effect of the adhesive structure on the electrode assembly, and in turn, improving the safety performance of the electrochemical device.

In some embodiments of this application, when the adhesive structure is soaked in an 85 °C electrolyte solution for 4 hours, a three-dimensional volume expansion rate of the adhesive structure is 180% to 500%, and optionally 200% to 450%, indicating that the adhesive structure can extend three-dimensionally along the directions of length, width, and thickness of the adhesive structure after being soaked in the electrolyte solution at a high temperature, and exhibits a good expansion rate. Therefore, the adhesive structure can effectively fill the clearance between the electrode assembly and the housing and fix the electrode assembly, thereby effectively improving the safety performance of the electrochemical device.

In some embodiments of this application, the rolling-ball initial tack of the adhesive structure is greater than or equal to a bonding force capable of adhering to a steel ball 8#, indicating that the adhesive structure exhibits good initial tack performance and can effectively enhance the binding effect of the adhesive structure on the electrode assembly, and in turn, improve the safety performance of the electrochemical device. In this application, the sizes of the steel balls used in testing the rolling-ball initial tack correspond to the serial numbers of the steel balls, and each steel ball is numbered based on the $32\times$ value of the inch diameter of the steel ball. Specifically, the steel ball is numbered 1# when the diameter of the ball is 1/32 inch, the steel ball is numbered 2# when the diameter of the ball is 2/32 inch, and so on, the steel ball is numbered 8# when the diameter of the ball is 8/32 inch, the steel ball is numbered 31# when the diameter of the ball is 31/32 inch, and the steel ball is numbered 32# when the diameter of the ball is 32/32 inch (that is, 1 inch).

In some embodiments of this application, a tensile strength of the adhesive structure is 0.2 N/mm to 0.5 N/mm, indicating that the adhesive structure exhibits good tensile strength, and effectively increases the lifespan of the adhesive structure, and in turn, improves the safety performance of the electrochemical device.

In this application, after the adhesive structure of any one of the foregoing embodiments is soaked in an 85 °C electrolyte solution for 24 hours, the color of the electrolyte solution is compared with a blank electrolyte solution under the same conditions by using a Pantone international standard colorimetric card, the color number of the electrolyte solution is the same as the color number of the blank electrolyte solution under the same conditions, and the morphology of the adhesive structure remains intact. This indicates that the adhesive structure provided in this application is of good resistance to electrolyte solution, thereby improving the safety performance of the electrochemical device and prolonging the lifespan of the electrochemical device.

In this application, the adhesive structure further includes an adhesive-repellent layer. The adhesive-repellent layer is disposed on the outer surface of the adhesive layer. Understandably, the inner surface of the adhesive layer is bonded to the surface of the swelling layer, so that the adhesive-repellent layer is disposed on the outer surface of the adhesive layer. With the adhesive-repellent layer disposed, when the adhesive structure is packaged by winding up, the adhesive layer is prevented from adhering to an object other than an object to be bonded, thereby facilitating the storage and transport of the adhesive structure.

In this application, the adhesive-repellent layer includes release paper or a release film. In this application, the type of the release paper or release film is not particularly limited, as long as the objectives of this application can be achieved.

The method for preparing the adhesive structure is not particularly limited herein, as long as the objectives of this application can be achieved. For example, in this application, the adhesive layer is disposed on the two surfaces of the swelling layer respectively. The two adhesive layers are a first adhesive layer and a second adhesive layer, respectively. The first adhesive layer and the second adhesive layer may be the same or different. Specifically, the following method for preparing the adhesive structure may be adopted, including the following steps:

(1) Melting, extruding, tape-casting, cooling, and molding a copolymer named poly(acrylonitrile-co-butadiene-co-styrene), and pulling the copolymer and heat-treating the copolymer at 150 °C to 200 °C for 1 to 2 hours to remove stress and obtain a swelling layer of 10 μm to 30 μm in thickness.

(2) Applying the material of the first adhesive layer onto one side of the swelling layer to obtain a first adhesive layer of 5 μm to 10 μm in thickness; and

(3) Applying the material of the second adhesive layer onto the other side of the swelling layer to obtain a second adhesive layer of 5 μm to 10 μm in thickness, that is, the adhesive structure of this application.

A second aspect of this application provides an electrochemical device. The electrochemical device includes an electrode assembly, a housing, and the adhesive structure according to any one of the foregoing technical solutions. The adhesive layer is bonded to an outer surface of the electrode assembly and/or the housing. Specifically, the first adhesive layer of the adhesive structure is bonded to the outer surface of the electrode assembly. The adhesive structure expands after being soaked in the electrolyte solution. The second adhesive layer of the adhesive structure is in contact with and bonded to the housing. In this way, the adhesive structure effectively fills the clearance between the housing and the electrode assembly, and the electrode assembly is tightly bound. In this way, when the electrochemical device is subjected to a drop test or a tumbling test, the electrode assembly and the housing can be effectively prevented from moving relative to each other, and the electrochemical device can be prevented from severe consequences such as voltage-drop-induced failure, an electrode plate break, or a tab break, thereby effectively improving the safety performance of the electrochemical device.

In this application, the structure of the electrode assembly is not particularly limited, and may be a jelly-roll structure or a stacked structure. In this application, the electrode assembly includes a separator, a positive electrode plate, and a negative electrode plate. The separator is configured to separate the positive electrode plate from the negative electrode plate to prevent an internal short circuit of the electrochemical device, and allow free passage of electrolyte ions so as to complete electrochemical charging and discharging processes. The numbers and types of the separators, positive electrode plates, and negative electrode plates are not particularly limited herein, as long as the objectives of this application can be achieved.

The positive electrode plate of this application includes a positive current collector and a positive active material layer. The positive current collector and positive active material layer hereof are not particularly limited herein, as long as the objectives of this application can be achieved. It is hereby noted that, the positive active material layer may be disposed on one surface of the positive current collector in a thickness direction or on both surfaces of the positive current collector in the thickness direction. The "surface" here may be the entire region of the positive current collector, or a partial region of the positive current collector, without being particularly limited in this application, as long as the objectives of the application can be achieved.

The negative electrode plate of this application includes a negative current collector and a negative active material layer. The negative current collector and negative active material layer hereof are not particularly limited herein, as long as the objectives of this application can be achieved. It is hereby noted that, the negative active material layer may be disposed on one surface of the negative current collector in a thickness direction or on both surfaces of the negative current collector in the thickness direction. The "surface" here may be the entire region of the negative current collector, or a partial region of the negative current collector, without being particularly limited in this application, as long as the objectives of the application can be achieved.

In some embodiments of this application, the electrode assembly assumes a stacked structure or a jelly-roll structure. The adhesive structure is disposed between the outer surface of the electrode assembly and the housing. This can effectively reduce the risk of deterioration of the binding effect of the adhesive structure on the electrode assembly caused by abutment and fixation. Based on a total area of the outer surface of the electrode assembly, a percentage of a bonding area of the adhesive structure is 10% to 100%.

When the percentage of the bonding area of the adhesive structure on the outer surface of the electrode assembly falls within the above range based on the distance between the electrode assembly and the housing, the adhesive structure can sufficiently fill the clearance between the electrode assembly and the housing, and improve the effect of fixing the electrode assembly. By controlling the percentage of the bonding area of the adhesive structure on the outer surface of the electrode assembly to fall within the above range, this application can effectively improve the high-temperature safety performance of the electrochemical device. It is hereby noted that the outer surface of the electrode assembly may be any one of the positive current collector, the positive active material layer, the negative current collector, the negative active material layer, or the separator.

The housing is not particularly limited herein, as long as the objectives of this application can be achieved. For example, the housing may include an inner layer and an outer layer. The material of the inner layer is not particularly limited herein, as long as the objectives of this application can be achieved. For example, the material of the inner layer may include at least one of polypropylene, polyester, p-hydroxybenzaldehyde, polyamide, polyphenylene ether, polyurethane, or the like. The material of the outer layer is not particularly limited herein, as long as the objectives of this application can be achieved. For example, the material of the outer layer may include at least one of an aluminum foil, an aluminum oxide layer, a silicon nitride layer, or the like. In addition, the housing may be an aluminum laminated film. The aluminum laminated film includes a nylon layer, an aluminum foil layer, a polypropylene layer, and/or a matte layer.

The thickness of the housing is not particularly limited herein, as long as the objectives of this application can be achieved. For example, the thickness of the housing may be 50 μm to 500 μm, and preferably 50 μm to 300 μm, and more preferably 50 μm to 200 μm. The housing falling within such a thickness range can effectively protect the internal structure of the electrochemical device.

The type of the electrolyte solution is not particularly limited herein, as long as the objectives of this application can be achieved. For example, the electrolyte solution may be prepared by mixing at least one of ethylene carbonate (EC), propylene carbonate (PC), diethyl carbonate (DEC), ethyl propionate (EP), ethyl methyl carbonate (EMC), dimethyl carbonate (DMC), fluoroethylene carbonate (FEC), or the like at a specified mass ratio to obtain an organic solution, and then adding a lithium salt in the organic solution to dissolve, and stirring well. The type of the lithium salt is not particularly limited herein, as long as the objectives of this application can be achieved. For example, the lithium salt may include at least one of $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiSiF_6$, LiBOB, or lithium difluoroborate. Preferably, the lithium salt may be $LiPF_6$ because it provides a high ionic conductivity and improves cycle characteristics.

The electrochemical device is not particularly limited herein, and may include, but is not limited to, a lithium metal secondary battery, a lithium-ion secondary battery (lithium-ion battery), a lithium polymer secondary battery, a lithium-ion polymer secondary battery, or the like.

The process of preparing the electrochemical device is well known to a person skilled in the art, and is not particularly limited in this application. For example, the preparation process may include, but without being limited to, the following steps: stacking the positive electrode plate, the separator, and the negative electrode plate in sequence, and performing operations such as winding and folding as required to obtain a jelly-roll electrode assembly; putting the electrode assembly into a packaging shell, injecting the electrolyte solution into the packaging shell, and sealing the packaging shell to obtain an electrochemical device; or, stacking the positive electrode plate, the separator, and the negative electrode plate in sequence, and then fixing the four corners of the entire stacked structure by use of adhesive tape to obtain a stacked-type electrode assembly, putting the electrode assembly into a packaging shell, injecting the electrolyte solution into the packaging shell, and sealing the packaging shell to obtain an electrochemical device. In addition, an overcurrent prevention element, a guide plate, and the like may be placed into the packaging shell as required, so as to prevent the rise of internal pressure, overcharge, and overdischarge of the electrochemical device.

A third aspect of this application provides an electronic device. The electronic device includes the electrochemical device according to the second aspect of this application. The electronic device exhibits good safety performance.

The electronic devices of this application are not particularly limited, and may include, but are not limited to, a laptop computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, and the like.

This application provides an adhesive structure, an electrochemical device containing the adhesive structure, and an electronic device. The adhesive structure includes a swelling layer and an adhesive layer disposed on at least one surface of the swelling layer. The swelling layer includes poly(acrylonitrile-co-butadiene-co-styrene). When the adhesive structure of this application is soaked in an 85 °C solution for 4 hours, a three-dimensional volume expansion rate of the adhesive structure is 180% to 500%. The adhesive structure can effectively fill a clearance between the housing and the electrode assembly. In addition, the adhesive structure is highly elastic and adhesive, and can cushion the stress generated in a drop test, a tumbling test, or the like, and maintain a good binding effect. The adhesive structure used in the electrochemical device can effectively improve safety performance of the electrochemical device. The electronic device of this application includes the electrochemical device of this application, and therefore, exhibits good safety performance.

## BRIEF DESCRIPTION OF DRAWINGS

To describe the technical solutions in the embodiments of this application or the prior art more clearly, the following outlines the drawings to be used in the embodiments of this application or the prior art. Evidently, the drawings outlined below are merely a part of embodiments of this application.

FIG. 1 is a schematic structural diagram of an adhesive structure according to some embodiments of this application;
FIG. 2 is a schematic diagram of how an adhesive structure works in an electrochemical device according to some embodiments of this application;
FIG. 3 is a schematic diagram of how a poly(acrylonitrile-co-butadiene-co-styrene) in an adhesive structure works in an electrolyte solution according to some embodiments of this application; and
FIG. 4 is a schematic structural diagram of an electrochemical device according to some embodiments of this application.

List of reference numerals: 10. electrode assembly; 20. adhesive structure; 21. first adhesive layer; 22. swelling layer; 23. second adhesive layer; 30. housing.

## DETAILED DESCRIPTION OF EMBODIMENTS

To make the objectives, technical solutions and advantages of this application clearer, the following describes this application in further detail with reference to drawings and embodiments. Evidently, the described embodiments are merely a part of but not all of the embodiments of this application. All other embodiments derived by a person of ordinary skill in the art based on the embodiments of this application without making any creative efforts still fall within the protection scope of this application.

It is hereby noted that in specific embodiments of this application, this application is construed by using a lithium-ion battery as an example of the electrochemical device, but the electrochemical device according to this application is not limited to the lithium-ion battery.

An adhesive structure according to some embodiments of this application includes a swelling layer and an adhesive layer disposed on at least one surface of the swelling layer. The accompanying drawings and the following embodiments are illustrated by using an example in which the adhesive layer is disposed on both surfaces of the swelling layer.

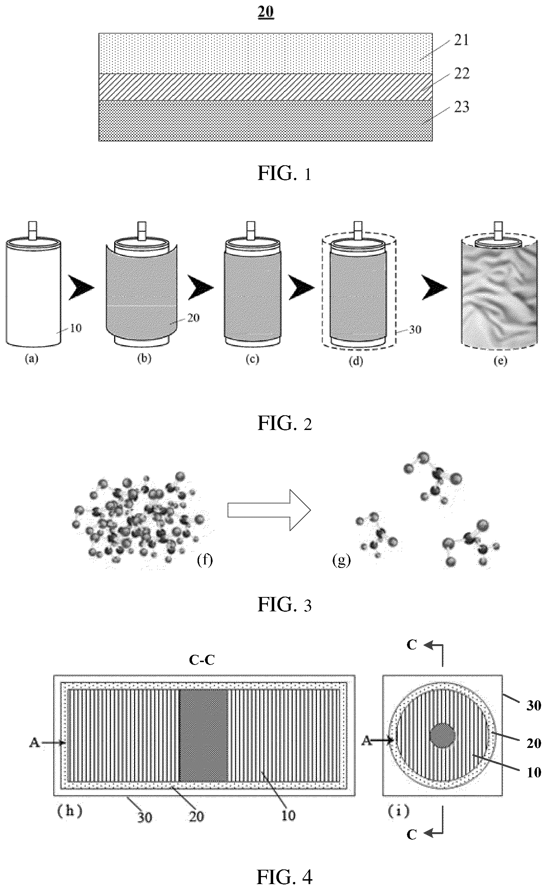

FIG. 1 is a schematic structural diagram of an adhesive structure according to some embodiments of this application. The adhesive structure 20 includes a first adhesive layer 21, a swelling layer 22, and a second adhesive layer 23. The swelling layer 22 is disposed between the first adhesive layer 21 and the second adhesive layer 23. The first adhesive layer 21 may be the same as or different from the second adhesive layer 23.

FIG. 2 is a schematic diagram of how an adhesive structure works in an electrochemical device according to some embodiments of this application. Subfigure (a) in FIG. 2 shows an electrode assembly 10; subfigure (b) in FIG. 2 is a schematic diagram of winding an adhesive structure 20 around the electrode assembly 10; subfigure (c) in FIG. 2 is a schematic structural diagram after the adhesive structure 20 is bonded to the electrode assembly 10; subfigure (d) in FIG. 2 is a schematic structural diagram after the electrode assembly 10 bonded to the adhesive structure 20 in subfigure (c) is put into the housing 30; and subfigure (e) in FIG. 2 is a schematic structural diagram of the adhesive structure 20 swelling in an electrochemical device filled with an electrolyte solution. As shown in FIG. 2, the adhesive structure 20 is bonded onto the outer surface of the electrode assembly 10. After the electrolyte solution is injected into the electrochemical device, the adhesive structure 20 swells and extends three-dimensionally along the directions of length, width, and thickness of the adhesive structure. The volume of the adhesive structure 20 increases to fill the clearance between the electrode assembly 10 and the housing 30 three-dimensionally.

FIG. 3 is a schematic diagram of how a poly(acrylonitrile-co-butadiene-co-styrene) in an adhesive structure works in an electrolyte solution according to some embodiments of this application. Subfigure (f) in FIG. 3 is a schematic structural diagram before a poly(acrylonitrile-co-butadiene-co-styrene) is soaked in an electrolyte solution; and subfigure (g) in FIG. 3 is a schematic structural diagram after the poly(acrylonitrile-co-butadiene-co-styrene) is soaked in the electrolyte solution. As shown in FIG. 3, after the poly(acrylonitrile-co-butadiene-co-styrene) is soaked in the electrolyte solution, the poly(acrylonitrile-co-butadiene-co-styrene) is pressed and enlarged at a relative fixed position between molecules under the action of the electrolyte solution. The intermolecular force is weakened, so that the adhesive structure extends three-dimensionally along the directions of length, width, and thickness of the adhesive structure. The adhesive structure expands in volume.

FIG. 4 is a schematic structural diagram of an electrochemical device according to some embodiments of this application. Subfigure (h) in FIG. 4 is a cross-sectional schematic structural diagram of an electrochemical device sectioned along a C-C line, and subfigure (i) in FIG. 4 is a top view of the electrochemical device viewed from a height direction of the electrochemical device. As shown in FIG. 4, the adhesive structure 20 is disposed between an outer surface A of the electrode assembly 10 and the housing 30. The adhesive structure 20 is bonded onto the outer surface A of the electrode assembly 10.

The implementations of this application are described below in more detail with reference to embodiments and comparative embodiments. Various tests and evaluations are performed by the following methods. In addition, unless otherwise specified, "%" is a percent by mass.

**Test methods and devices:**

**Testing the bonding force:**

Testing the bonding force in accordance with the standard GBIT 2792-2014 *Peel Force Test Method,* and using a Go Tech tensile machine to test the bonding force at an 180° angle: (1) Affixing the adhesive structure of each embodiment and comparative embodiment to Al foil, and cutting the Al foil into strip-shaped specimens of 20 mm × 60 mm in size that is adjustable proportionally according to the actual situation; (2) hot-pressing a specimen for 40 minutes at a temperature of 85 °C and under a pressure of 1 MPa, and then soaking the specimen in an 85 °C electrolyte solution of the corresponding embodiment or comparative embodiment for 4 hours, and then bonding the Al foil face onto a steel sheet along the length direction of the specimen by using double-sided tape (Japan 5000NS), where the bonding length is not less than 40 mm; and (3) fixing the steel sheet to the corresponding position of the GoTech tensile machine, pulling the other end of the specimen that is not bonded to the steel sheet, putting the specimen into a collet directly or by means of a connector, and then clamping the specimen tightly, where the pulled-up part of the specimen is spatially at an angle of 180° to the steel sheet. Letting the collet pull the specimen at a speed of 50□0.2 mm/min, and finally, using an average value of the tensile forces in a flat and steady region as the bonding force.

**Testing the expansion rate:**

Fitting the adhesive structure of each embodiment and comparative embodiment closely onto 50 $\mu$m-thick release paper, calendering the adhesive structure back and forth for 3 round trips by using a 2 kg rubber pressure roller so that the adhesive structure is flat and wrinkle-free. Cutting out a specimen of 20 mm × 100 mm in width and length, soaking the specimen in the electrolyte solution of a corresponding embodiment or comparative embodiment at 85 °C for 4 hours, and then checking the expansion status. Measuring the thickness of the swollen adhesive structure by using a micrometer.

$$\text{Expansion rate} = \text{swollen thickness/non-swollen thickness} \times 100\%.$$

**Hot-drying test:**

Placing an adhesive structure in an 80 °C oven for 4 hours, and then taking it out, and checking the appearance for shrinkage and deformation.

**Cold-drying test:**

Leaving an adhesive structure to stand in a cold-drying system at 2 °C to 10 °C for 24 hours, and checking the appearance for warped edges.

**Testing the rolling-ball initial tack:**

A rolling-ball initial tack tester is an instrument that measures the initial tack by rolling a steel ball over an adhesive surface (that is, the adhesive layer of the adhesive structure) of the adhesive structure placed flat on a tilting board, and that evaluates the initial tack of the adhesive structure based on a largest steel ball that can be bonded to the adhesive surface of a specified length.

(1) Sloping-surface ball rolling apparatus: This apparatus mainly includes a tilting board, a ball releaser, a bracket, a pedestal, and ball catching box.
(2) Steel ball: The steel ball is made of GCr15 bearing steel, with an accuracy not lower than level-0 accuracy specified in GB 308-77 *Steel Ball,* and with a diameter of 1/32 inch to 1 inch, and can be used as a test steel ball.

Each steel ball is numbered based on the 32× value of the inch diameter of the steel ball. Specifically, the steel ball is numbered 1# when the diameter of the ball is 1/32 inch, the steel ball is numbered 2# when the diameter of the ball is 2/32 inch, and so on, the steel ball is numbered 8# when the diameter of the ball is 8/32 inch, the steel ball is numbered 31# when the diameter of the ball is 31/32 inch, and the steel ball is numbered 32# when the diameter of the ball is 32/32 inch (that is, 1 inch). A group of steel balls numbered consecutively need to be used in the test.
The steel balls need to be stored in rustproof oil. The balls with rust or scars need to be replaced promptly.
The adjustable tilt angle is 0° to 60°, the tabletop width is 120 mm, the test region width is 80 mm, and the standard steel ball is 1/32 inch to 1 inch.
The test steps include: Taking 3 specimens, and performing a rolling ball test by using the largest steel ball. If a specimen fails stick to the steel ball, a steel ball of a next smaller size is substituted to perform a rolling ball test. This process goes on until the specimen sticks to the steel ball. The serial number of steel ball that the specimen sticks to successfully is the rolling-ball initial tack test result.

**Testing the tensile strength:**

Testing the tensile strength of the adhesive structure in each embodiment and comparative embodiment by using a universal tensile tester.

**Tumbling test:**

Leaving a lithium-ion battery to stand in a 25 °C environment for 60 minutes, and then measuring the voltage, internal resistance, and capacity. Loading the lithium-ion battery into a fixture, setting the height of the roller to 1 m, where a contact surface between the roller and the lithium-ion battery is a metal contact surface. Rolling the roller for 500 rotations in total, and keeping rolling for 5 minutes in each rotation. Measuring and recording the voltage and internal resistance at the end of every 100 rotations, and checking the appearance and taking pictures.

Criteria for determining pass of the test: The test is passed if there is no smoke, no fire, no explosion, and no liquid leakage, the voltage drop is less than 50 mV, and the internal resistance is less than 18 mΩ.

Failure rate = number of failed specimens/total number of specimens × 100%.

**Drop test:**

Leaving a lithium-ion battery to stand in a 25 °C environment for 60 minutes, and then measuring the voltage, internal resistance, and capacity. Loading the lithium-ion battery into a special-purpose fixture, and dropping the battery freely by using a dropping device. Placing the lithium-ion battery at a position that is 1.9 m high from the ground. Dropping the lithium-ion battery freely for 300 times. Measuring and recording the voltage and internal resistance at the end of every 100 drops, and checking the appearance and taking pictures.

Criteria for determining pass of the test: The test is passed if there is no smoke, no fire, no explosion, and no liquid leakage, the voltage drop is less than 50 mV, and the internal resistance is less than 18 mΩ.

Failure rate = number of failed specimens/total number of specimens × 100%.

**Embodiment 1-1**

**<Preparing a negative electrode plate>**

Mixing graphite powder as a negative active material, conductive carbon black (Super P) as a conductive agent, and styrene butadiene rubber (SBR) as a binder at a mass ratio of 96: 1.5: 2.5, and then adding deionized water as a solvent to formulate a slurry in which the solid content is 70%, and stirring well. Applying the slurry even onto one surface of an 8 $\mu$m-thick negative current collector copper foil, and drying the foil at 110 °C to obtain a negative electrode plate coated with a 130 $\mu$m-thick negative active material on a single side. The coating on a single side of the negative electrode plate is completed upon completion of the above steps. Subsequently, repeating the foregoing steps on the other surface of the negative electrode plate to obtain a negative electrode plate coated with the negative active material on both sides. Cold-pressing and cutting the negative electrode plate after completion of coating, and leaving the negative electrode plate ready for future use.

**<Preparing a positive electrode plate>**

Mixing lithium cobalt oxide ($LiCoO_2$) as a positive active material, nano conductive carbon black as a conductive agent, and polyvinylidene difluoride (PVDF) as a binder at a mass ratio of 97.5: 1.0: 1.5, and adding N-methyl-pyrrolidone (NMP) as a solvent to formulate a slurry in which the solid content is 75%, and stirring well. Applying the slurry evenly onto one surface of a 9 $\mu$m-thick positive current collector aluminum foil, and drying the foil at 90 °C to obtain a positive electrode plate coated with a 110 $\mu$m-thick coating layer. The above steps finish the coating on a single side of the positive electrode plate. Subsequently, repeating the above steps on the other surface of the positive electrode plate to obtain a positive electrode plate coated with a positive active material on both sides. Cold-pressing and cutting the positive electrode plate after completion of coating, and leaving the electrode plate ready for future use.

**<Preparing an electrolyte solution>**

Mixing ethylene carbonate (EC), ethyl methyl carbonate (EMC), and diethyl carbonate (DEC) at a mass ratio of 30: 50: 20 in an dry argon atmosphere to obtain an organic solvent, and then adding lithium hexafluorophosphate as a lithium salt into the organic solvent to dissolve, and stirring well to obtain an electrolyte solution in which the lithium salt concentration is 1.15 mol/L.

**<Preparing a separator>**

Mixing aluminum oxide and polyvinylidene difluoride at a mass ratio of 90: 10, and dissolving the mixture in deionized water to form a ceramic slurry with a solid content of 50%. Subsequently, coating one side of a porous substrate (polyethylene, thickness: 7 $\mu$m; average pore diameter: 0.073 $\mu$m; porosity: 26%) with the ceramic slurry evenly by a micro-gravure coating method. Drying the slurry to obtain a double-layer structure that includes a ceramic coating and a porous substrate. The thickness of the ceramic coating is 50 $\mu$m.

Mixing polyvinylidene difluoride (PVDF) and polyacrylate at a mass ratio of 96: 4, and dissolving the mixture in deionized water to form a polymer slurry with a solid content of 50%. Subsequently, coating both surfaces of the double-layer structure of the ceramic coating and the porous substrate with the polymer slurry evenly by a micro-gravure coating method, and drying the slurry to obtain a separator, in which the thickness of a single coating layer formed by the polymer slurry is 2 $\mu$m.

**<Preparing an adhesive structured**

The adhesive structure includes a swelling layer as well as a first adhesive layer and a second adhesive layer disposed on two surfaces of the swelling layer respectively. The swelling layer includes 98 wt% poly(acrylonitrile-co-butadiene-co-styrene) and 2 wt% functional resin poly(styrene-b-ethylene-b-butene-b-styrene). The first adhesive layer includes SIS, and the second adhesive layer includes PP. The mass ratio between the acrylonitrile, the butadiene, and the styrene in the poly(acrylonitrile-co-butadiene-co-styrene) is 10: 75: 15. The weight-average molecular weight of the poly(acrylonitrile-co-butadiene-co-styrene) is 400000. The weight-average molecular weight of the poly(styrene-b-ethylene-b-butene-b-styrene) is 120000. The thickness of the adhesive structure is 36 $\mu$m. The thickness of the swelling layer is 20 $\mu$m. The thickness of the first adhesive layer is 8 $\mu$m. The thickness of the second adhesive layer is 8 $\mu$m.

**<Preparing a lithium-ion battery>**

Stacking the above-prepared positive electrode plate, separator, and negative electrode plate in sequence in such a way that the separator is located between the positive electrode plate and the negative electrode plate to serve a function of separation, and winding the stacked structure to obtain a jelly-roll electrode assembly. Bonding the first adhesive layer of the adhesive structure onto the outer surface of the electrode assembly, and then loading the electrode assembly into an aluminum laminated film housing, dehydrating the packaged electrode assembly at 80 °C, and then injecting the prepared electrolyte solution. Performing steps such as vacuum sealing, standing, chemical formation, and degassing to obtain a lithium-ion battery. A percentage of the projected area of the adhesive structure on the outer surface of the electrode assembly is 50%.

Embodiments 1-2 to 1-4 and Embodiment 1-12 are identical to Embodiment 1-1 except that the mass percent of the poly(acrylonitrile-co-butadiene-co-styrene) and the mass percent of the functional resin are adjusted adaptively according to Table 1.

Embodiments 1-5 to 1-8 are identical to Embodiment 1-2 except that the mass percentages of the acrylonitrile, butadiene, and styrene are adjusted according to Table 1.

Embodiment 1-9 is identical to Embodiment 1-2 except that the type of the functional resin is adjusted according to Table 1.

Embodiment 1-10 is identical to Embodiment 1-2 except that the type of the material of the first adhesive layer is adjusted according to Table 1.

Embodiment 1-11 is identical to Embodiment 1-2 except that the type of the material of the second adhesive layer is adjusted according to Table 1.

Embodiments 2-1 to 2-2 are identical to Embodiment 1-4 except that the thickness of the swelling layer is adjusted according to Table 2.

Embodiments 2-3 to 2-4 are identical to Embodiment 1-4 except that the thickness of the first adhesive layer is adjusted according to Table 2.

Embodiments 2-5 to 2-6 are identical to Embodiment 1-4 except that the thickness of the second adhesive layer is adjusted according to Table 2.

Embodiments 2-7 to 2-8 are identical to Embodiment 1-4 except that the thickness of the swelling layer, the thickness of the first adhesive layer, and the thickness of the second adhesive layer are adjusted according to Table 2.

Embodiments 2-9 to 2-10 are identical to Embodiment 1-4 except that the percentage of the bonding area is adjusted according to Table 2.

Comparative Embodiment 1-1 is identical to Embodiment 1-1 except that, in <Preparing an adhesive structure>, the swelling layer includes 100 wt% polyurethane (a composition formed by butylene glycol polyol and diphenylmethane-4,4□-diisocyanate at a mass ratio of 1: 1), and the first adhesive layer is omitted.

Comparative Embodiment 1-2 is identical to Embodiment 1-1 except that, in <Preparing an adhesive structure>, the swelling layer includes 100 wt% polyurethane acrylate (a composition made by mixing and defoaming 40 wt% polyurethane acrylate, 70 wt% isobornyl acrylate, and 0.5 wt% photoinitiator), and the first adhesive layer is omitted.

Comparative Embodiment 1-3 is identical to Embodiment 1-1 except that, in <Preparing an adhesive structure>, the swelling layer includes 100 wt% epoxy acrylic acid (a composition made by mixing and defoaming 60 wt% epoxy acrylate, 38 wt% isobornyl acrylate, and 1.2 wt% photoinitiator), and the first adhesive layer is omitted.

Comparative Embodiment 1-4 is identical to Embodiment 1-1 except that, in <Preparing an adhesive structure>, the swelling layer includes 100 wt% cellulose (made from cellulose acetate propionate compound with a number-average molecular weight of 70000), and the first adhesive layer is omitted.

The preparation parameters of Embodiments 1-1 to 1-12, Comparative Embodiments 1-1 to 1-4 are adjusted according to Table 1. The preparation parameters of Embodiments 2-1 to 2-10 are adjusted according to Table 2. The performance parameters of Embodiments 1-1 to 1-12, Embodiments 2-1 to 2-10, and Comparative Embodiments 1-1 to 1-4 are shown in Table 3A and Table 3B.

**Table 1**

| | Swelling layer | | Mass ratio between acrylonitrile, butadiene, and styrene | Type of functional resin | Material of first adhesive layer | Material of second adhesive layer |
| | Constituents | Mass percent (%) | | | | |
|---|---|---|---|---|---|---|
| Embodiment 1-1 | ABS + functional resin | 98+2 | 10: 75: 15 | SEBS | SIS | PP |
| Embodiment 1-2 | ABS + functional resin | 95+5 | 10: 75: 15 | SEBS | SIS | PP |
| Embodiment 1-3 | ABS + functional resin | 90+10 | 10: 75: 15 | SEBS | SIS | PP |
| Embodiment 1-4 | ABS + functional resin | 85+15 | 10: 75: 15 | SEBS | SIS | PP |
| Embodiment 1-5 | ABS + functional resin | 95+5 | 5: 80: 15 | SEBS | SIS | PP |
| Embodiment 1-6 | ABS + functional resin | 95+5 | 5: 65: 25 | SEBS | SIS | PP |
| Embodiment 1-7 | ABS + functional resin | 95+5 | 20: 75: 5 | SEBS | SIS | PP |
| Embodiment 1-8 | ABS + functional resin | 95+5 | 18: 60: 22 | SEBS | SIS | PP |
| Embodiment 1-9 | ABS + functional resin | 95+5 | 10: 75: 15 | Poly(ethylene-co-vinyl acetate) | SIS | PP |
| Embodiment 1-10 | ABS + functional resin | 95+5 | 10: 75: 15 | SEBS | Polyethylene | PP |
| Embodiment 1-11 | ABS + functional resin | 95+5 | 10: 75: 15 | SEBS | SIS | Polyamide |
| Embodiment 1-12 | ABS + functional resin | 80+20 | 10: 75: 15 | SEBS | SIS | PP |

**EP 4 394 971 A1**

(continued)

| | Swelling layer | | Mass ratio between acrylonitrile, butadiene, and styrene | Type of functional resin | Material of first adhesive layer | Material of second adhesive layer |
| | Constituents | Mass percent (%) | | | | |
|---|---|---|---|---|---|---|
| Comparative Embodiment 1-1 | Polyurethane | 100 | \ | \ | \ | PP |
| Comparative Embodiment 1-2 | Polyurethane acrylate | 100 | \ | \ | \ | PP |
| Comparative Embodiment 1-3 | Epoxy acrylic acid | 100 | \ | \ | \ | PP |
| Comparative Embodiment 1-4 | Cellulose | 100 | \ | \ | \ | PP |
| Note: "\" in Table 1 indicates nonexistence of the corresponding parameter. | | | | | | |

**Table 2**

| | Thickness of swelling layer (μm) | Thickness of first adhesive layer (μm) | Thickness of second adhesive layer (μm) | Thickness of adhesive structure (μm) | Percentage of projected area (%) |
|---|---|---|---|---|---|
| Embodiment 1-4 | 20 | 8 | 8 | 36 | 50 |
| Embodiment 2-1 | 10 | 8 | 8 | 26 | 50 |
| Embodiment 2-2 | 30 | 8 | 8 | 46 | 50 |
| Embodiment 2-3 | 20 | 5 | 8 | 33 | 50 |
| Embodiment 2-4 | 20 | 10 | 8 | 38 | 50 |
| Embodiment 2-5 | 20 | 8 | 5 | 33 | 50 |
| Embodiment 2-6 | 20 | 8 | 10 | 38 | 50 |
| Embodiment 2-7 | 10 | 5 | 5 | 20 | 50 |
| Embodiment 2-8 | 30 | 10 | 10 | 50 | 50 |
| Embodiment 2-9 | 20 | 8 | 8 | 36 | 10 |
| Embodiment 2-10 | 20 | 8 | 8 | 36 | 100 |

**Table 3A (To be continued)**

| | Bonding force (N/mm) | | | | Adhesive structure | | | |
| | First adhesive layer | Second adhesive layer | Rolling-ball initial tack | Tensile strength (N/mm) | Appearance after cold-drying for 24 h | Appearance after cold-drying for 48 h | Appearance after drying at 80°C for 4 h | Expansion rate |
|---|---|---|---|---|---|---|---|---|
| Embodiment 1-1 | 0.255 | 0.231 | 8# | 0.467 | Not warped | Not warped | Not shrunk, not deformed | 412% |
| Embodiment 1-2 | 0.247 | 0.244 | 10# | 0.359 | Not warped | Not warped | Not shrunk, not deformed | 354% |

| | Bonding force (N/mm) | | | | Adhesive structure | | | |
|---|---|---|---|---|---|---|---|---|
| | First adhesive layer | Second adhesive layer | Rolling-ball initial tack | Tensile strength (N/mm) | Appearance after cold-drying for 24 h | Appearance after cold-drying for 48 h | Appearance after drying at 80°C for 4 h | Expansion rate |
| Embodiment 1-3 | 0.251 | 0.257 | 14# | 0.316 | Not warped | Not warped | Not shrunk, not deformed | 257% |
| Embodiment 1-4 | 0.257 | 0.283 | 16# | 0.295 | Not warped | Not warped | Not shrunk, not deformed | 189% |
| Embodiment 1-5 | 0.256 | 0.354 | 10# | 0.359 | Not warped | Not warped | Not shrunk, not deformed | 354% |
| Embodiment 1-6 | 0.254 | 0.251 | 10# | 0.355 | Not warped | Not warped | Not shrunk, not deformed | 366% |
| Embodiment 1-7 | 0.257 | 0.249 | 10# | 0.348 | Not warped | Not warped | Not shrunk, not deformed | 349% |
| Embodiment 1-8 | 0.258 | 0.253 | 10# | 0.335 | Not warped | Not warped | Not shrunk, not deformed | 357% |
| Embodiment 1-9 | 0.249 | 0.245 | 10# | 0.354 | Not warped | Not warped | Not shrunk, not deformed | 361% |
| Embodiment 1-10 | 0.256 | 0.248 | 10# | 0.350 | Not warped | Not warped | Not shrunk, not deformed | 357% |
| Embodiment 1-11 | 0.253 | 0.247 | 10# | 0.351 | Not warped | Not warped | Not shrunk, not deformed | 359% |
| Embodiment 1-12 | 0.249 | 0.252 | 16# | 0.247 | Not warped | Not warped | Not shrunk, not deformed | 163% |
| Embodiment 2-1 | 0.245 | 0.250 | 10# | 0.259 | Not warped | Not warped | Not shrunk, not deformed | 354% |
| Embodiment 2-2 | 0.248 | 0.251 | 10# | 0.483 | Not warped | Not warped | Not shrunk, not deformed | 362% |
| Embodiment 2-3 | 0.161 | 0.255 | 10# | 0.345 | Not warped | Not warped | Not shrunk, not deformed | 358% |
| Embodiment 2-4 | 0.321 | 0.247 | 10# | 0.349 | Not warped | Not warped | Not shrunk, not deformed | 361% |

(continued)

| | Bonding force (N/mm) | | | | Adhesive structure | | | |
|---|---|---|---|---|---|---|---|---|
| | First adhesive layer | Second adhesive layer | Rolling-ball initial tack | Tensile strength (N/mm) | Appearance after cold-drying for 24 h | Appearance after cold-drying for 48 h | Appearance after drying at 80°C for 4 h | Expansion rate |
| Embodiment 2-5 | 0.247 | 0.159 | 10# | 0.353 | Not warped | Not warped | Not shrunk, not deformed | 355% |
| Embodiment 2-6 | 0.253 | 0.315 | 10# | 0.351 | Not warped | Not warped | Not shrunk, not deformed | 359% |
| Embodiment 2-7 | 0.154 | 0.157 | 10# | 0.254 | Not warped | Not warped | Not shrunk, not deformed | 353% |
| Embodiment 2-8 | 0.309 | 0.318 | 10# | 0.487 | Not warped | Not warped | Not shrunk, not deformed | 365% |
| Embodiment 2-9 | 0.247 | 0.250 | 10# | 0.349 | Not warped | Not warped | Not shrunk, not deformed | 366% |
| Embodiment 2-10 | 0.255 | 0.251 | 10# | 0.352 | Not warped | Not warped | Not shrunk, not deformed | 357% |
| Comparative Embodiment 1-1 | \ | 0.249 | 6# | 0.173 | Edge warped | Edge warped | Shrunk, deformed | 158% |
| Comparative Embodiment 1-2 | \ | 0.251 | 6# | 0.162 | Edge warped | Edge warped | Shrunk, deformed | 143% |
| Comparative Embodiment 1-3 | \ | 0.255 | 6# | 0.184 | Edge warped | Edge warped | Shrunk, deformed | 111% |
| Comparative Embodiment 1-4 | \ | 0.253 | 6# | 0.195 | Edge warped | Edge warped | Shrunk, deformed | 120% |

**Table 3B (Continued)**

| | Tumbling test | | | | Drop test | | | |
|---|---|---|---|---|---|---|---|---|
| | Number of failures/ total number | Failure rate | Number of failures with voltage drop | Number of failures with deteriorated internal resistance | Number of failures/total number | Failure rate | Number of failures with voltage drop | Number of failures with deteriorated internal resistance |
| Embodiment 1-1 | 0/12 | 0% | 0 | 0- | 0/12 | 0% | 0 | 0 |
| Embodiment 1-2 | 0/12 | 0% | 0 | 0- | 0/12 | 0% | 0 | 0 |

(continued)

|  | Tumbling test | | | | Drop test | | | |
|---|---|---|---|---|---|---|---|---|
|  | Number of failures/ total number | Failure rate | Number of failures with voltage drop | Number of failures with deteriorated internal resistance | Number of failures/total number | Failure rate | Number of failures with voltage drop | Number of failures with deteriorated internal resistance |
| Embodiment 1-3 | 0/12 | 0% | 0 | 0- | 0/12 | 0% | 0 | 0 |
| Embodiment 1-4 | 0/12 | 0% | 0 | 0- | 1/12 | 8.3% | 1 | 1 |
| Embodiment 1-5 | 0/12 | 0% | 0 | 0 | 0/12 | 0% | 0 | 0 |
| Embodiment 1-6 | 0/12 | 0% | 0 | 0 | 0/12 | 0% | 0 | 0 |
| Embodiment 1-7 | 0/12 | 0% | 0 | 0 | 0/12 | 0% | 0 | 0 |
| Embodiment 1-8 | 0/12 | 0% | 0 | 0 | 0/12 | 0% | 0 | 0 |
| Embodiment 1-9 | 0/12 | 0% | 0 | 0 | 0/12 | 0% | 0 | 0 |
| Embodiment 1-10 | 0/12 | 0% | 0 | 0 | 0/12 | 0% | 0 | 0 |
| Embodiment 1-11 | 0/12 | 0% | 0 | 0 | 0/12 | 0% | 0 | 0 |
| Embodiment 1-12 | 1/12 | 8.3% | 1 | 0 | 2/12 | 16.7% | 2 | 1 |
| Embodiment 2-1 | 0/12 | 0% | 0 | 0 | 0/12 | 0% | 0 | 0 |
| Embodiment 2-2 | 0/12 | 0% | 0 | 0 | 0/12 | 0% | 0 | 0 |
| Embodiment 2-3 | 0/12 | 0% | 0 | 0 | 0/12 | 0% | 0 | 0 |
| Embodiment 2-4 | 0/12 | 0% | 0 | 0 | 0/12 | 0% | 0 | 0 |
| Embodiment 2-5 | 0/12 | 0% | 0 | 0 | 0/12 | 0% | 0 | 0 |
| Embodiment 2-6 | 0/12 | 0% | 0 | 0 | 0/12 | 0% | 0 | 0 |
| Embodiment 2-7 | 0/12 | 0% | 0 | 0 | 0/12 | 0% | 0 | 0 |
| Embodiment 2-8 | 0/12 | 0% | 0 | 0 | 0/12 | 0% | 0 | 0 |
| Embodiment 2-9 | 2/12 | 16.7% | 2 | 0 | 3/12 | 25% | 3 | 3 |

(continued)

| | Tumbling test | | | | Drop test | | | |
|---|---|---|---|---|---|---|---|---|
| | Number of failures/ total number | Failure rate | Number of failures with voltage drop | Number of failures with deteriorated internal resistance | Number of failures/t otal number | Failure rate | Number of failures with voltage drop | Number of failures with deteriorated internal resistance |
| Embodiment 2-10 | 0/12 | 0% | 0 | 0 | 0/12 | 0% | 0 | 0 |
| Comparative Embodiment 1-1 | 3/12 | 25.0% | 3 | 1 | 4/12 | 33.3% | 4 | 2 |
| Comparative Embodiment 1-2 | 5/12 | 41.7% | 5 | 2 | 8/12 | 66.7% | 8 | 6 |
| Comparative Embodiment 1-3 | 6/12 | 50.0% | 6 | 4 | 6/12 | 50.0% | 6 | 5 |
| Comparative Embodiment 1-4 | 7/12 | 58.3% | 7 | 4 | 6/12 | 50.0% | 6 | 4 |
| Note: "\" in Table 3A and Table 3B indicates absence of the corresponding parameter. | | | | | | | | |

As can be seen from Embodiments 1-1 to 1-4, Embodiment 1-12, and Comparative Embodiment 1-1, the safety performance of the lithium-ion battery varies with the constituents of the swelling layer. With the constituents of the swelling layer falling within the range specified herein, the lithium-ion battery exhibits good safety performance.

The mass percent of the poly(acrylonitrile-co-butadiene-co-styrene) generally affects the safety performance of the lithium-ion battery. As can be seen from Embodiments 1-1 to 1-4 and Embodiment 1-12, when the mass percent of the poly(acrylonitrile-co-butadiene-co-styrene) falls within the range specified herein, the lithium-ion battery exhibits good safety performance.

The mass ratio between the acrylonitrile, the butadiene, and the styrene in the poly(acrylonitrile-co-butadiene-co-styrene) generally also affects the safety performance of the lithium-ion battery. As can be seen from Embodiments 1-4 to 1-8, when the mass ratio between the acrylonitrile, the butadiene, and the styrene falls within the range specified herein, the lithium-ion battery exhibits good safety performance.

The type of the functional resin generally also affects the safety performance of the lithium-ion battery. As can be seen from Embodiment 1-4 and Embodiment 1-9, when the type of the functional resin falls within the range specified herein, the lithium-ion battery exhibits good safety performance.

The type of the material of the first adhesive layer generally also affects the safety performance of the lithium-ion battery. As can be seen from Embodiment 1-4 and Embodiment 1-10, when the type of the material of the first adhesive layer falls within the range specified herein, the lithium-ion battery exhibits good safety performance.

The type of the material of the second adhesive layer generally also affects the safety performance of the lithium-ion battery. As can be seen from Embodiment 1-4 and Embodiment 1-11, when the type of the material of the second adhesive layer falls within the range specified herein, the lithium-ion battery exhibits good safety performance.

The thickness of the swelling layer, the thickness of the first adhesive layer, the thickness of the second adhesive layer, and the thickness of the adhesive structure generally also affect the safety performance of the lithium-ion battery. As can be seen from Embodiment 1-4 and Embodiments 2-1 to 2-8, when the thickness of the swelling layer, the thickness of the first adhesive layer, the thickness of the second adhesive layer, and the thickness of the adhesive structure fall within the ranges specified herein, the lithium-ion battery exhibits good safety performance.

The percentage of the bonding area of the adhesive structure on the outer surface of the electrode assembly generally also affects the high-temperature safety performance of the lithium-ion battery. As can be seen from Embodiment 1-4 and Embodiments 2-9 to 2-10, when the percentage of the bonding area of the adhesive structure on the outer surface of the electrode assembly falls within the range specified herein, the lithium-ion battery exhibits good safety performance.

What is described above is merely exemplary embodiments of this application, but is not intended to limit this application. Any modifications, equivalent replacements, improvements, and the like made without departing from the spirit and principles of this application still fall within the protection scope of this application.

**Claims**

1. An adhesive structure, comprising a swelling layer and an adhesive layer disposed on at least one surface of the swelling layer, wherein
the swelling layer comprises poly(acrylonitrile-co-butadiene-co-styrene).

2. The adhesive structure according to claim 1, wherein, based on a total mass of the swelling layer, a mass percent of the poly(acrylonitrile-co-butadiene-co-styrene) is 85% to 98%.

3. The adhesive structure according to claim 1, wherein, based on a total mass of the poly(acrylonitrile-co-butadiene-co-styrene), a mass ratio between acrylonitrile, butadiene, and styrene in the poly(acrylonitrile-co-butadiene-co-styrene) is (5 to 20): (55 to 80): (5 to 25).

4. The adhesive structure according to claim 1, wherein the swelling layer further comprises functional resin, and the functional resin comprises at least one of poly(styrene-b-ethylene-b-butene-b-styrene), poly(ethylene-co-vinyl acetate), polyurethane elastomer, thermoplastic elastomer, polyurethane acrylate, polyisobutylene, or polybutadiene.

5. The adhesive structure according to claim 1, wherein a thickness of the adhesive structure is 20 $\mu$m to 50 $\mu$m.

6. The adhesive structure according to claim 1, wherein the adhesive structure satisfies at least one of the following features:

   (a) a thickness of the swelling layer is 10 $\mu$m to 30 $\mu$m; or
   (b) a thickness of the adhesive layer is 5 $\mu$m to 10 $\mu$m.

7. The adhesive structure according to claim 1, wherein a material of the adhesive layer comprises at least one of polymethyl methacrylate, polypropylene, hot-melt styrene-isoprene-styrene rubber, polyethylene, or polyamide.

8. The adhesive structure according to claim 1, wherein a bonding force of the adhesive layer is 0.15 N/mm to 0.5 N/mm.

9. The adhesive structure according to claim 1, wherein the adhesive structure satisfies at least one of the following conditions:

   (1) when the adhesive structure is soaked in an 85 °C electrolyte solution for 4 hours, a three-dimensional volume expansion rate of the adhesive structure is 180% to 500%;
   (2) a rolling-ball initial tack of the adhesive structure is greater than or equal to a bonding force capable of adhering to a steel ball 8#; or
   (3) a tensile strength of the adhesive structure is 0.2 N/mm to 0.5 N/mm.

10. The adhesive structure according to claim 1, wherein the adhesive structure further comprises an adhesive-repellent layer, and the adhesive-repellent layer is disposed on an outer surface of the adhesive layer; and
the adhesive-repellent layer comprises a release paper or a release film.

11. An electrochemical device, wherein the electrochemical device comprises an electrode assembly, a housing, and the adhesive structure according to any one of claims 1 to 10, and the adhesive layer is bonded to an outer surface of the electrode assembly and/or an inner surface of the housing.

12. The electrochemical device according to claim 11, wherein
based on a total area of the outer surface of the electrode assembly, a percentage of a bonding area of the adhesive structure is 10% to 100%.

13. An electronic device, comprising the electrochemical device according to any one of claims 11 to 12.

**20**

FIG. 1

FIG. 2

FIG. 3

FIG. 4

## INTERNATIONAL SEARCH REPORT

| International application No. |
| --- |
| **PCT/CN2021/122353** |

**A. CLASSIFICATION OF SUBJECT MATTER**

H01M 10/0525(2010.01)i; H01M 10/058(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

WPI, EPODOC, CNPAT, CNKI: 胶粘, 电化学, 溶胀, 粘结, 层, 丙烯腈, 丁二烯, 苯乙烯, glue, electrochemical, swelling, bind +, layer+, acrylonitrile, butadiene, styrene

**C. DOCUMENTS CONSIDERED TO BE RELEVANT**

| Category* | Citation of document, with indication, where appropriate, of the relevant passages | Relevant to claim No. |
| --- | --- | --- |
| Y | CN 102195075 A (SONY CORP.) 21 September 2011 (2011-09-21) description, paragraphs 2-105, and figure 1 | 1-13 |
| Y | CN 101356685 A (PANASONIC CORP.) 28 January 2009 (2009-01-28) description, page 5, paragraph 3 to page 6, paragraph 2 | 1-13 |
| A | CN 112646505 A (EVE HYPERPOWER BATTERIES INC. et al.) 13 April 2021 (2021-04-13) entire document | 1-13 |
| A | CN 110183584 A (XINWANGDA HUIZHOU POWER NEW ENERGY CO., LTD.) 30 August 2019 (2019-08-30) entire document | 1-13 |
| A | CN 105070882 A (YANCHENG INSTITUTE OF TECHNOLOGY) 18 November 2015 (2015-11-18) entire document | 1-13 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **16 May 2022** | **26 May 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/122353**

| Patent document cited in search report | | | Publication date (day/month/year) | Patent family member(s) | | | Publication date (day/month/year) |
|---|---|---|---|---|---|---|---|
| CN | 102195075 | A | 21 September 2011 | US | 2011217589 | A1 | 08 September 2011 |
| | | | | JP | 2011181441 | A | 15 September 2011 |
| | | | | US | 8936862 | B2 | 20 January 2015 |
| | | | | JP | 5880621 | B2 | 09 March 2016 |
| | | | | JP | 2014179338 | A | 25 September 2014 |
| CN | 101356685 | A | 28 January 2009 | WO | 2007097172 | A1 | 30 August 2007 |
| | | | | JP | WO2007097172 | A1 | 09 July 2009 |
| | | | | KR | 20080095166 | A | 28 October 2008 |
| | | | | US | 2009077794 | A1 | 26 March 2009 |
| | | | | US | 8129048 | B2 | 06 March 2012 |
| CN | 112646505 | A | 13 April 2021 | None | | | |
| CN | 110183584 | A | 30 August 2019 | None | | | |
| CN | 105070882 | A | 18 November 2015 | None | | | |

Form PCT/ISA/210 (patent family annex) (January 2015)